# EUROPEAN PATENT APPLICATION

(11) **EP 4 703 988 A1**
(43) Date of publication of application: **04.03.2026**
(21) Application number: 24197458.3
(22) Date of filing: 30.08.2024
(51) Int. Cl.: G06Q 10/06, G06Q 10/20, G06Q 10/10, G06F 21/31, G05B 23/02, G05B 17/02

(54) **SYSTEM AND METHOD FOR CONDUCTING COLLABORATIVE SURVEYS OF INDUSTRIAL COMPONENTS**

(71) Applicant: Siemens Aktiengesellschaft, 80333 München (DE)
(72) Inventor: SANFUI, Subhajit, 560068 Bangalore, Karnataka (IN)
(74) Representative: Isarpatent

(57) **Abstract**

Disclosed is a method (100) for conducting collaborative surveys of industrial components. The method includes providing a virtual dashboard comprising current information about a plurality of industrial components to be surveyed. The method further includes integrating sensor data, from corresponding physical sensors, and simulation data, from corresponding digital twins, of the plurality of industrial components, into the virtual dashboard. The method further includes authenticating user devices associated with survey personnel to provide access to the virtual dashboard. The method further includes facilitating execution of predefined survey workflows for the industrial components by the survey personnel using corresponding authenticated user devices via the virtual dashboard, to evaluate survey metrics therefor. The method further includes updating the virtual dashboard using the survey metrics of the at least one of the plurality of industrial components.

## Description

The present invention relates generally to the field of industrial system management and safety assurance. More specifically, the invention relates to a computer-implemented system and method for conducting collaborative surveys using a virtual dashboard to assess, inspect, and evaluate critical components in various industrial settings.

In industrial environments, numerous components require periodic surveys by specialized personnel to maintain operational integrity, ensure safety, and comply with regulatory requirements. However, several significant challenges are associated with conventional survey methods. A primary issue is the availability of surveyors, as scheduling conflicts or unavailability can lead to operational downtimes and increased costs. Additionally, the traditional survey process often lacks real-time communication of results to stakeholders, hindering prompt decision-making and responsive actions. Many surveys are difficult to conduct remotely due to their nature, necessitating physical presence and potentially exposing personnel to hazardous environments.

To address these challenges, various approaches have been developed in the field of industrial surveying. These include the implementation of case-specific protocols for particular industries, such as the Periodic Safety Review (PSR) by the International Atomic Energy Agency (IAEA) for nuclear power plants, or the Ship Inspection Report Programme (SIRE) by the Oil Companies International Marine Forum (OCIMF) for maritime vessel safety surveys. Some facilities have adopted digital technologies to enhance data collection and analysis during surveys. However, these solutions are often limited in scope and do not fully address the comprehensive needs of industrial surveying.

Current systems generally lack the collaborative and immersive aspects that advanced virtual environments and technologies could potentially provide. They often struggle to facilitate effective collaboration between survey teams from different organizations, leading to coordination difficulties and potential downtimes. The inability to conduct comprehensive remote surveys remains a significant drawback. Furthermore, existing frameworks typically do not provide real-time information to all survey team members and stakeholders simultaneously, limiting the potential for immediate, coordinated responses to identified issues.

Another limitation of current survey methods is the potential for corruption or incomplete assessments due to inadequate monitoring and oversight. The lack of a comprehensive, transparent system can lead to instances where operators and survey teams might engage in practices that result in incomplete or faulty surveys. Additionally, many existing solutions do not effectively address the need for parallel workflows in complex industrial systems with multiple components in a same industrial setting requiring simultaneous survey execution.

Therefore, there is a need for a solution that can streamline the survey process, enhance real-time data integration and communication, facilitate remote and collaborative assessments, and improve overall survey quality and efficiency. The present invention leverages advanced technologies, including digital twins for predictive analysis, to provide a more comprehensive, efficient, and flexible approach to survey of industrial components. The present invention reduces operational downtimes and associated costs, and also significantly enhances safety by ensuring thorough, transparent, and timely surveys, thereby minimizing the risk of accidents that could lead to financial losses and potential harm to human life.

The object of the present invention is achieved by a computer-implemented method for conducting collaborative surveys of industrial components. The method employs a processing unit to execute a series of steps that optimize the performance of solver methods on hardware platforms. The method includes providing a virtual dashboard comprising current information about a plurality of industrial components to be surveyed. Herein, the current information includes survey status information and component state information. The method further includes integrating sensor data, from corresponding physical sensors, and simulation data, from corresponding digital twins, of the plurality of industrial components, into the virtual dashboard. The method further includes authenticating user devices associated with survey personnel to provide access to the virtual dashboard. The method further includes facilitating execution of predefined survey workflows for the industrial components by the survey personnel using corresponding authenticated user devices via the virtual dashboard. Each survey workflow comprises a sequence of assessment tasks for at least one of the plurality of industrial components to evaluate survey metrics therefor. The method further includes updating the virtual dashboard using the survey metrics of the at least one of the plurality of industrial components.

In one or more embodiments, providing the virtual dashboard comprises generating a virtual environment representing the plurality of industrial components with the current information thereof, for information retrieval therefrom.

In one or more embodiments, the process of authenticating user devices associated with survey personnel to provide access to the virtual dashboard comprises assigning one or more assessment tasks to each of the user devices associated with survey personnel based on predefined roles thereof. The process further comprises configuring the virtual environment to restrict permissions for information retrieval about the plurality of industrial components to each of the user devices associated with survey personnel based on assigned one or more assessment tasks thereto.

In one or more embodiments, the process of integrating the sensor data and the simulation data from the digital twins comprises collecting, from the physical sensors, the sensor data associated with the plurality of industrial components. The process further comprises implementing, by the digital twins, physics-based simulation(s) and/or Al-based simulation(s), for the plurality of industrial components based, at least in part, on the collected sensor data to generate the simulation data. The process further comprises updating the virtual dashboard using the collected sensor data and the generated simulation data.

In one or more embodiments, the process of facilitating execution of predefined survey workflows using the authenticated user devices comprises enabling real-time collaboration between the user devices associated with survey personnel by at least one of real-time chat, voice communication, video conferencing, collaborative document editing, and shared virtual environments.

In one or more embodiments, the process of facilitating execution of predefined survey workflows comprises displaying one or more of on-site camera feeds related to the industrial components on the authenticated user devices.

In one or more embodiments, the process of facilitating execution of predefined survey workflows further comprises configuring the virtual dashboard to coordinate parallel execution of assessment tasks across multiple industrial components.

In one or more embodiments, the method also comprises tracking progress of completion of each assessment task in the survey workflow. The method further comprises dynamically adjusting the sequence of remaining assessment tasks in the survey workflow based on the tracked progress.

In one or more embodiments, the process of updating the virtual dashboard comprises processing the survey metrics of the at least one of the plurality of industrial components to identify one or more changes in the component state information. The process further comprises dynamically updating the current information about the plurality of industrial components within the virtual dashboard based on the identified changes in the component state information.

In one or more embodiments, the survey status information comprises at least one of survey completed, survey ongoing, and survey pending. Further, the component state information comprises at least one of operational status, performance metrics, and maintenance history.

The object of the present invention is also achieved by a system comprising one or more processing units and a memory unit communicatively coupled to the one or more processing units. Herein, the memory unit comprises a survey-conducting module stored in the form of machine-readable instructions executable by the one or more processing units. Herein, the survey-conducting module is configured to perform aforementioned method steps for conducting collaborative surveys of industrial components.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for conducting collaborative surveys of industrial components, in accordance with one or more embodiments of the present invention;
FIG 2 is a block diagram representation of a system for conducting collaborative surveys of industrial components, in accordance with one or more embodiments of the present invention;
FIGS 3A-3D are graphical user interfaces (GUIs) showing schematic representations of exemplary survey workflows for different industrial components, in accordance with one or more embodiments of the present invention;
FIG 4 is a GUI showing an exemplary virtual dashboard for a use-case of merchant ship, in accordance with one or more embodiments of the present invention; and
FIG 5 is a GUI showing an exemplary virtual dashboard for a use-case of nuclear power plant, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for conducting collaborative surveys of industrial components are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

In the present context, "industrial components" refer to parts, systems, or equipment within large-scale industrial facilities such as nuclear power plants, chemical plants, and large cargo ships. These components are essential to the operation, safety, and efficiency of the industrial facility. Examples may include, but are not limited to, reactors, boilers, turbines, engines, pressure vessels, pipelines, electrical systems, and safety mechanisms. The condition and performance of these components directly impact the overall functionality and safety of the industrial facility. "Surveys" in this context refer to systematic inspections, examinations, and assessments of industrial components. These surveys are conducted to evaluate the condition, performance, and compliance of the components with safety standards and regulatory requirements. "Collaborative surveys" describe a process where survey personnel work together to assess industrial components. This collaboration may involve sharing information, coordinating activities, and jointly analysing results.

The "survey personnel" in the present context includes multiple stakeholders and survey teams. Each stakeholder has a defined role in the survey process. Each survey team may include representatives from different organizations. Specifically, these survey teams consist of individuals representing at least two of the following: component owners, operators, regulatory bodies, insurance providers, and independent inspection agencies. For example, during a survey of a nuclear power plant, one survey team may include representatives from the plant operator. Another survey team may include representatives from the regulatory body overseeing nuclear safety. These teams collaborate within the framework of the system to conduct thorough surveys of such industrial components in operation.

The term "real-time" as used herein refers to near real-time, meaning that the data or information is processed and made available with minimal delay, allowing for timely updates and responses that closely approximate immediate action.

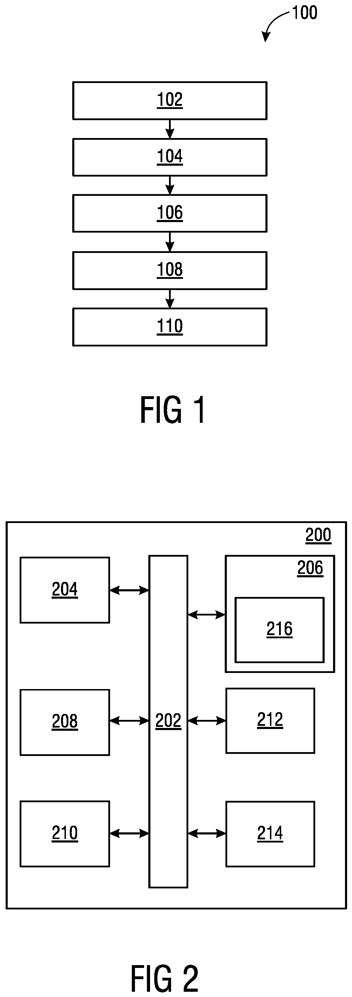

Referring to FIG 1, illustrated is a flowchart of a method (as represented by reference numeral 100) for conducting collaborative surveys of industrial components, in accordance with an embodiment of the present invention. The method 100 enables collaborative surveys of industrial components by leveraging technologies, including real-time communication, immersive experience, and coordinated assessment activities by remote survey teams. This approach addresses the limitations of traditional survey methods by providing a collaborative framework for assessing industrial components in various industrial settings. The method 100 facilitates collaboration among diverse survey teams and stakeholders, to enhance efficiency, accuracy and safety of the industry survey process by combining diverse expertise and perspectives in a coordinated manner while reducing operational downtime and costs.

Referring to FIG 2, illustrated is a block diagram of a system 200 for conducting collaborative surveys of industrial components, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for conducting collaborative surveys of industrial components. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for conducting collaborative surveys of industrial components. In particular, the memory unit 206 includes a survey-conducting module 216 to perform steps for the said purpose.

Referring to FIGS 1-2 in combination, various steps of the method 100 (as described hereinafter), which may be executed in the system 200, or specifically in the processing unit 204 of the system 200, for conducting collaborative surveys of industrial components, are described. The method 100 employs the processing unit 204 to execute a series of steps that optimize the performance of solver methods on hardware platforms. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes providing a virtual dashboard including current information about a plurality of industrial components to be surveyed. The virtual dashboard serves as a central interface for accessing and visualizing data related to the industrial components. The virtual dashboard is configured to display current information. Herein, the current information refers to the existing data and status of each industrial component to be surveyed. The virtual dashboard is designed to present the current information in an accessible format, such as by utilizing visual elements including color-coded indicators, graphical representations, and/or numerical displays. The virtual dashboard consolidates the current information about the industrial components into a single interface, which provides a comprehensive view to the survey personnel, supporting efficient survey planning, execution, and decision-making processes.

For purposes of the present invention, the current information includes survey status information and component state information. The survey status information within the virtual dashboard provides up-to-date details about the progress and condition of ongoing surveys for each industrial component. The survey status information includes at least one of "survey completed," "survey ongoing," or "survey pending" for each component. These indicators in the survey status information allow survey personnel to quickly assess which components have been surveyed, which are currently under examination, and which are scheduled for future surveys. The component state information within the virtual dashboard provides real-time data about the current condition and operational status of each industrial component. The component state information includes at least one of operational status (e.g., functioning, non-functioning, or in maintenance), performance metrics (e.g., efficiency ratings, output levels, etc.), and maintenance history (e.g., maintenance completed, maintenance pending, etc.). These parameters provide an overview of the health and performance of each industrial component, enabling survey personnel to make informed decisions in the survey process.

In present implementations, providing the virtual dashboard includes generating a virtual environment representing the plurality of industrial components with the current information thereof, for information retrieval therefrom. This virtual environment is a digital representation of the plurality of industrial components that are subject to survey. The virtual environment is generated to visually depict the industrial components in a manner that corresponds to their physical arrangement or logical relationship within the industrial setting. Within this virtual environment, each represented industrial component is associated with its corresponding current information. This current information, which includes both the survey status information and the component state information, is integrated into the visual representation of each component. The virtual environment is designed to facilitate information retrieval. Users can interact with the virtual representations of the industrial components to access detailed information about each component.

In the present embodiments, the virtual dashboard is a collaborative and interactive dashboard. Such virtual dashboard provides a 3D virtual space where survey personnel, including survey teams, operators, and stakeholders, can access and interact with current information about the industrial components. This virtual space mirrors the physical environment of the industrial system, providing an accurate digital representation that includes all data points necessary for thorough surveys, facilitating remote and collaborative efforts. Such a collaborative and interactive dashboard may be accessed by survey personnel using various devices, including but not limited to computers, tablets, smartphones, and virtual reality headsets. These devices enable survey personnel to interact with the virtual environment, allowing them to view and manipulate digital representations of the industrial components. The survey personnel can conduct inspections, analyse data, and communicate findings in real-time, all within such virtual dashboard.

At step 104, the method 100 includes integrating sensor data, from corresponding physical sensors, and simulation data, from corresponding digital twins, of the plurality of industrial components, into the virtual dashboard. The sensor data is collected from physical sensors that are installed on or near the industrial components. These sensors continuously monitor various parameters of the components, such as temperature, pressure, vibration, or other relevant metrics specific to each component. The sensor data provides real-time measurements of the current state and performance of the industrial components. Simultaneously, the method 100 utilizes digital twins of the industrial components. These digital twins are virtual models of the physical components, designed to simulate the behaviour and performance of the actual components under various conditions. The digital twins generate simulation data based on complex algorithms and historical data, providing predictive insights and theoretical performance metrics for each component. The integrated data is used to update the current information displayed in the virtual dashboard, including both the survey status information and the component state information. This integration supports real-time monitoring and informed decision-making by providing survey personnel with updated information available about the state and predicted behaviour of the industrial components.

In present embodiments, the integration process may include collecting, from the physical sensors, the sensor data associated with the plurality of industrial components. As discussed, the physical sensors are installed on or near the industrial components and continuously monitor various parameters relevant to the operation and condition of each component. The method 100 involves collecting the sensor data, which may include measurements such as temperature, pressure, vibration, flow rates, or other component-specific metrics. Following the collection of sensor data, the method 100 involves implementing, by the digital twins, physics-based simulation(s) and/or AI-based simulation(s) for the plurality of industrial components based, at least in part, on the collected sensor data to generate the simulation data. The physics-based simulations rely on established scientific principles and mathematical models to predict component behaviour, while AI-based simulations may use machine learning algorithms to analyse patterns and predict outcomes. The method 100 may implement the physics-based simulation(s) and the AI-based simulation(s) independently or in combination. These simulations may also incorporate other data in addition to the collected sensor data. This additional data may include, but is not limited to, environmental data, operational parameters, historical performance data, or any other relevant information that could impact the accuracy and effectiveness of the simulation. After generating the simulation data, the method 100 proceeds to updating the virtual dashboard using the collected sensor data and the generated simulation data. This integration and updating process is performed continuously or at regular intervals to maintain the accuracy of the information displayed in the virtual dashboard.

At step 106, the method 100 includes authenticating user devices associated with survey personnel to provide access to the virtual dashboard. The authentication process ensures that only authorized individuals can access the sensitive information and functionalities of the virtual dashboard. The authentication process begins when a user device, such as a computer, a tablet, a smartphone, a virtual reality headset attempts to connect to the virtual dashboard. The user device is prompted to provide authentication credentials. These credentials may include username and password combinations, biometric data (such as fingerprints or facial recognition), security tokens, or other forms of identification that are recognized as valid for authentication purposes. If the authentication is successful, the user device is granted access to the virtual dashboard. The authentication process ensures that the survey personnel is an authorized representative, such as a component owner or regulatory body member, and that only authorized survey personnel can access the virtual dashboard and its sensitive information about industrial components.

In particular, the method 100 employs an authentication process for authenticating user devices associated with survey personnel to provide access to the virtual dashboard. The authentication process, first, involves assigning one or more assessment tasks to each of the user devices associated with survey personnel based on predefined roles thereof. For this purpose, a database (such as, the database 210) is maintained that defines the roles of different survey personnel, such as equipment inspectors, safety auditors, or maintenance technicians. Based on these predefined roles, the specific assessment tasks are automatically assigned to each user device when it is authenticated. For example, a user device associated with an equipment inspector may be assigned tasks related to visual inspections and performance measurements of specific industrial components, while a device associated with a safety auditor may be assigned tasks related to compliance checks and risk assessments. The authentication process, then, involves configuring the virtual environment to restrict permissions for information retrieval about the plurality of industrial components to each of the user devices associated with survey personnel based on assigned one or more assessment tasks thereto. The method 100 implements a set of access controls within the virtual environment that limit what information each authenticated user device can retrieve or interact with. These restrictions ensure that survey personnel can only access the information that is directly relevant to their assigned tasks and roles. For instance, a user device assigned to inspect a specific set of components may only be granted permission to retrieve detailed information about those components, and may have restricted access to information about other components, within the virtual environment. It may be contemplated by a person skilled in the art that these permission restrictions may be implemented through various technical means, such as role-based access control (RBAC) mechanisms, data filtering, or dynamic content rendering based on user authentication.

At step 108, the method 100 includes facilitating execution of predefined survey workflows for the industrial components by the survey personnel using corresponding authenticated user devices via the virtual dashboard. It may be understood that the survey personnel interact with the virtual dashboard using their corresponding authenticated user devices, which have been previously granted appropriate access permissions. These survey workflows are created based on industry standards, regulatory requirements, and best practices for surveying industrial components. The virtual dashboard presents these predefined survey workflows to the authenticated user devices in a systematic and user-friendly manner. Each survey workflow includes a sequence of assessment tasks for at least one of the plurality of industrial components to evaluate survey metrics therefor. That is, each survey workflow includes a series of steps or tasks that survey personnel may need to complete to assess the condition, performance, and compliance of the industrial components. The survey metrics are quantifiable measures or qualitative assessments that provide insight into the component's status, performance, or potential issues. These survey metrics may include factors such as, operational efficiency, safety compliance, structural integrity, performance against design specifications, maintenance requirements, remaining useful life, environmental impact, regulatory compliance, and the like.

The virtual dashboard is designed to guide the survey personnel through the sequence of assessment tasks for each workflow. The assessment tasks within a survey workflow may include a variety of activities such as visual inspections, document reviews, data analysis, sensor readings, performance tests, and compliance checks. As each task is completed, the relevant survey metrics are updated in real-time within the virtual dashboard. Specifically, as survey personnel progress through the survey workflow, they can input data, observations, and assessment results directly into the virtual dashboard using their authenticated user devices. This allows for continuous monitoring of the component's status throughout the survey process.

The method 100 may also implement features to track the time taken for each task, flag any issues or anomalies detected during the survey, and automatically generate reports based on the data collected through execution of the survey workflow.

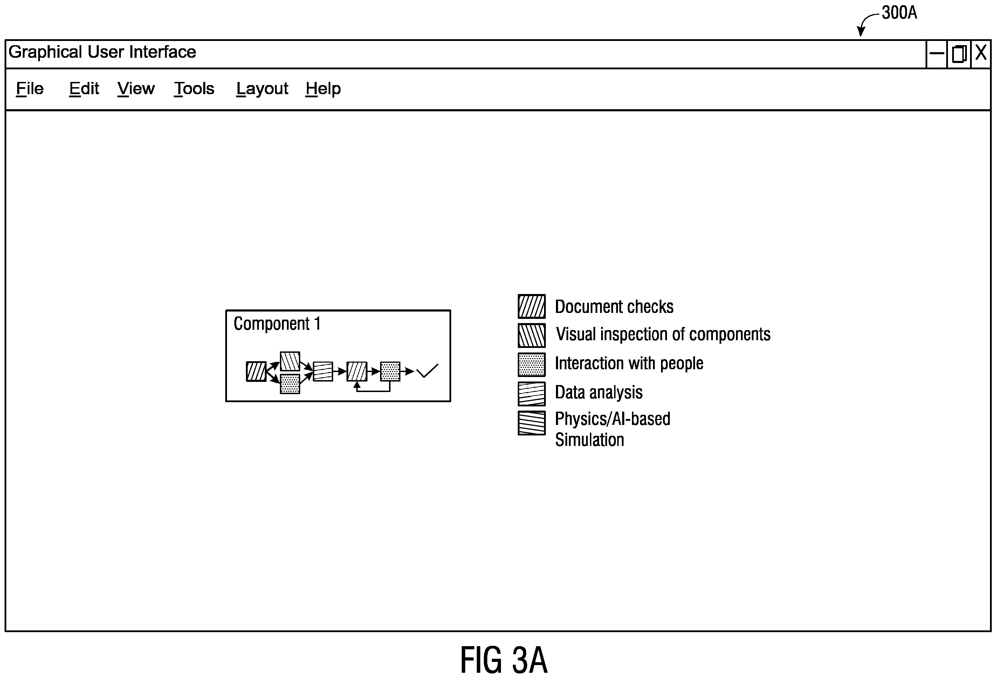

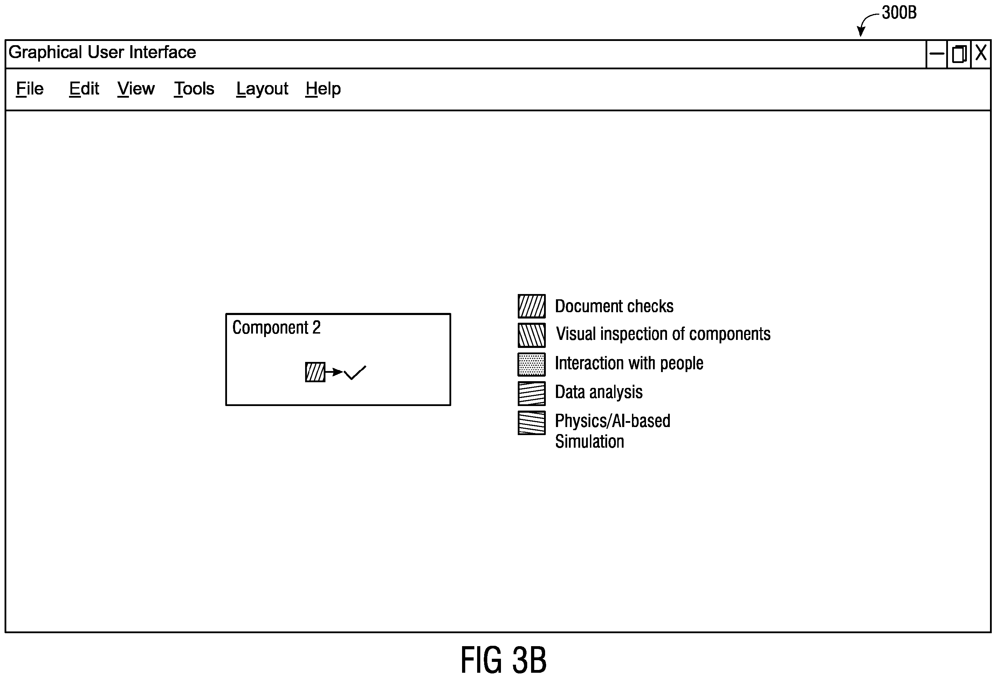

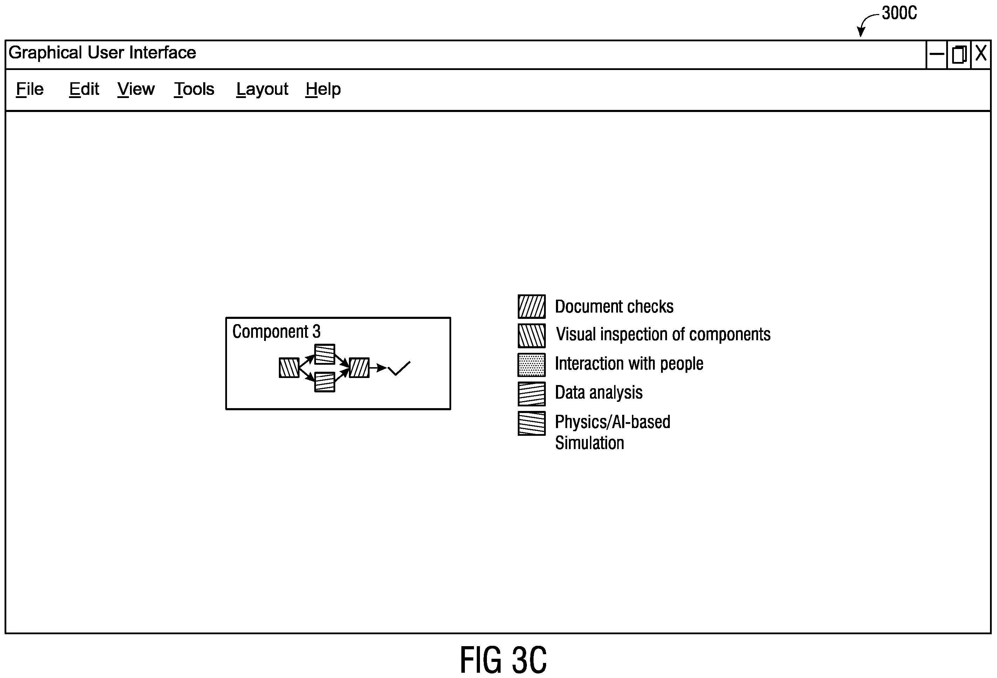

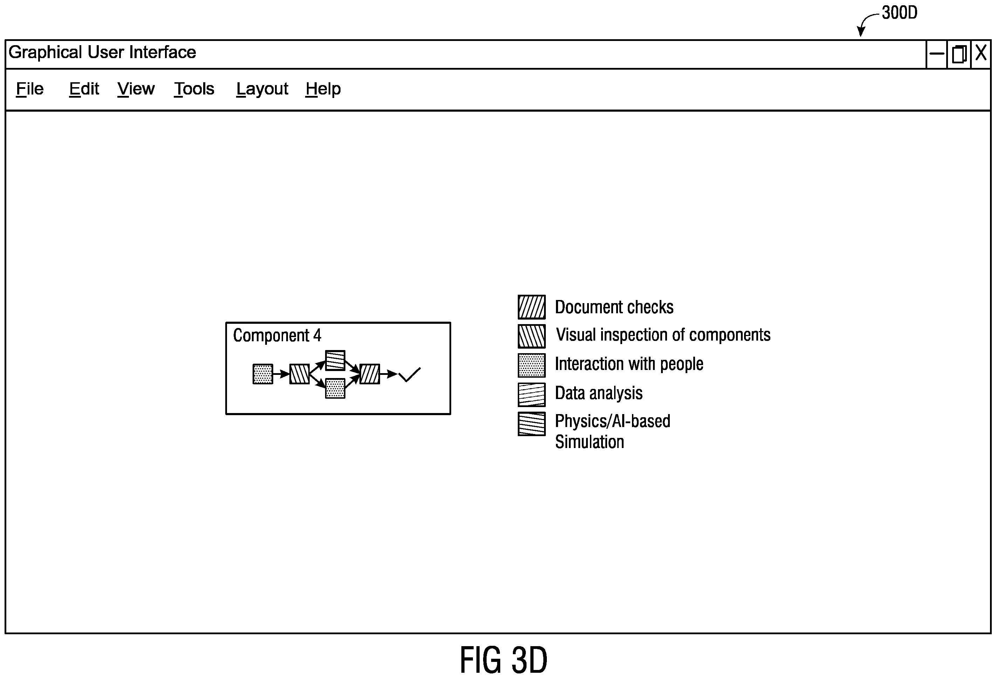

FIGS 3A-3D are graphical user interfaces (GUIs) showing schematic representations of exemplary survey workflows for different industrial components. Such GUIs may be shown using the interface 208 of the system 200, for reference of the user. In particular, FIG 3A is a GUI 300A showing a schematic representation of an exemplary survey workflow for Component 1. This survey workflow includes a sequence of tasks including document checks, visual inspection, interaction with people, data analysis, and a final document check before completion. FIG 3B is a GUI 300B showing a schematic representation of an exemplary survey workflow for Component 2. This survey workflow includes a single document check task before completion. FIG 3C is a GUI 300C showing a schematic representation of an exemplary survey workflow for Component 3. This survey workflow includes visual inspection, followed by parallel tasks of data analysis and physics/AI-based simulation, concluding with a document check before completion. FIG 3D is a GUI 300D showing a schematic representation of an exemplary survey workflow for Component 4. This workflow includes a sequence of tasks including interaction with people, document checks, and data analysis, with some tasks being performed multiple times or in parallel before completion.

In some embodiments, facilitating execution of predefined survey workflows using the authenticated user devices includes enabling real-time collaboration between the user devices associated with survey personnel. These capabilities are designed to allow survey personnel to communicate, share information, and work together effectively, even when they are not physically co-located. Such real-time collaboration may be achieved by at least one of real-time chat, voice communication, video conferencing, collaborative document editing, and shared virtual environments. Herein, real-time chat functionality allows survey personnel to exchange text messages instantly through the virtual dashboard. This feature enables quick communication for clarifications, updates, or coordination between team members working on different aspects of the survey. Voice communication capabilities are integrated to allow survey personnel to engage in audio conversations through their authenticated user devices. This feature facilitates more detailed discussions and immediate verbal communication when text-based chat is insufficient. Video conferencing functionality is provided within the virtual dashboard, enabling face-to-face communication between survey personnel. This feature is particularly useful for visual demonstrations and remote inspections. Collaborative document editing tools are also incorporated, allowing multiple survey personnel to simultaneously view, edit, and comment on documents related to the survey process. This feature ensures that all team members can contribute to and access the most up-to-date documentation in real-time. Shared virtual environments are implemented to allow survey personnel to interact with 3D representations of industrial components or entire facilities simultaneously. These real-time collaboration tools allow survey personnel to work together efficiently, regardless of their physical locations.

In an embodiment, facilitating execution of predefined survey workflows further includes displaying one or more of on-site camera feeds related to the industrial components on the authenticated user devices. This feature integrates live video streams from cameras installed at the industrial site into the virtual dashboard interface. The on-site cameras are strategically positioned to capture views of the industrial components that are subject to survey. These cameras may be fixed in specific locations or may be mobile, such as those mounted on drones or carried by on-site personnel. The video feeds from these on-site cameras are made available for display on the authenticated user devices of survey personnel. The video feeds are integrated into the virtual dashboard interface, allowing survey personnel to access them alongside other relevant information and tools needed for executing the predefined survey workflows. This allows remote survey personnel to visually inspect industrial components without being physically present at the site. This feature contributes to more efficient surveys of industrial components by providing visual data that complements other forms of information available through the virtual dashboard.

In an embodiment, facilitating execution of predefined survey workflows further includes configuring the virtual dashboard to coordinate parallel execution of assessment tasks across multiple industrial components. This configuration of the virtual dashboard enables the simultaneous execution of assessment tasks for different industrial components or different aspects of the same component, thereby optimizing the overall efficiency of the survey process. To facilitate parallel execution, the virtual dashboard implements task assignment and resource allocation features. For this purpose, the predefined survey workflows are analysed for all components and the assessment tasks are identified that can be performed concurrently without conflicts, and then these assessment tasks are assigned to available survey personnel based on their roles, expertise, and current workload. The method 100 may also implement features to manage dependencies between tasks across different components. If an assessment task for one component relies on the completion of an assessment task for another component, the virtual dashboard is configured to manage the sequencing of these assessment tasks to minimize delays. This approach allows for more efficient use of survey personnel and resources, reducing the overall time required to complete comprehensive surveys.

In some embodiments, the method 100 further includes tracking progress of completion of each assessment task in the survey workflow. This tracking is performed in real-time as survey personnel execute their assigned assessment tasks. Such progress tracking may include recording the start and end times of each assessment task, the percentage of completion, and any intermediate checkpoints within complex assessment tasks. The method 100, then, includes dynamically adjusting the sequence of remaining assessment tasks in the survey workflow based on the tracked progress. This dynamic adjustment is performed by analysing the current state of the survey workflow, considering factors such as completed assessment tasks and their outcomes, time taken for completed assessment tasks compared to expected durations, availability of resources and personnel, urgency or priority of remaining assessment tasks, any unexpected findings or issues identified during completed assessment tasks, and the like. This information is used to recalculate the optimal sequence for the remaining assessment tasks. This may involve reordering assessment tasks, parallelizing certain activities, or adjusting the allocation of resources to different assessment tasks. The dynamic adjustment aims to optimize the efficiency of the survey process while ensuring that all necessary assessment tasks are still completed.

Referring back to FIG 1, at step 110, the method 100 includes updating the virtual dashboard using the survey metrics of the at least one of the plurality of industrial components. Such updating process occurs after the completion of the survey workflows and the evaluation of survey metrics for the industrial components. For this purpose, the collected survey metrics may be processed to ensure consistency and compatibility with the virtual dashboard. The virtual dashboard is then updated to incorporate these new survey metrics. This update may involve refreshing existing data fields and/or adding new entries related to the industrial components, or generating new visual representations of the component states based on the survey results. In some instances, following the update, the method 100 may also trigger notifications to relevant stakeholders about the availability of new survey results. These notifications can be customized based on user roles and areas of responsibility, ensuring that each stakeholder is informed about updates relevant to their specific interests or duties. This updated information ensures that all users have access to the most current and accurate information about the state of the industrial components, supporting informed decision-making regarding maintenance, operations, and long-term planning for the industrial system.

In some embodiments, updating the virtual dashboard, first, involves processing the survey metrics of the at least one of the plurality of industrial components to identify one or more changes in the component state information. For this purpose, the survey metrics are compared against the previously recorded state information for each component. This comparison may involve statistical analysis, trend identification, or threshold-based assessments to determine if significant changes have occurred in condition, performance, or compliance status of the component. The method 100, then, involves dynamically updating the current information about the plurality of industrial components within the virtual dashboard based on the identified changes in the component state information. Herein, the relevant sections of the virtual dashboard are modified to reflect the new component state information. This modification may include updating numerical values, changing status indicators, revising performance charts or graphs, and adjusting color-coded visual representations of component states. In cases where significant changes are identified, these changes may be highlighted with visual cues such as flashing indicators, colour changes, or pop-up notifications, to draw attention to components that have undergone notable changes in their state information. This approach supports real-time decision-making and enables prompt responses to any significant changes in the state of the industrial components.

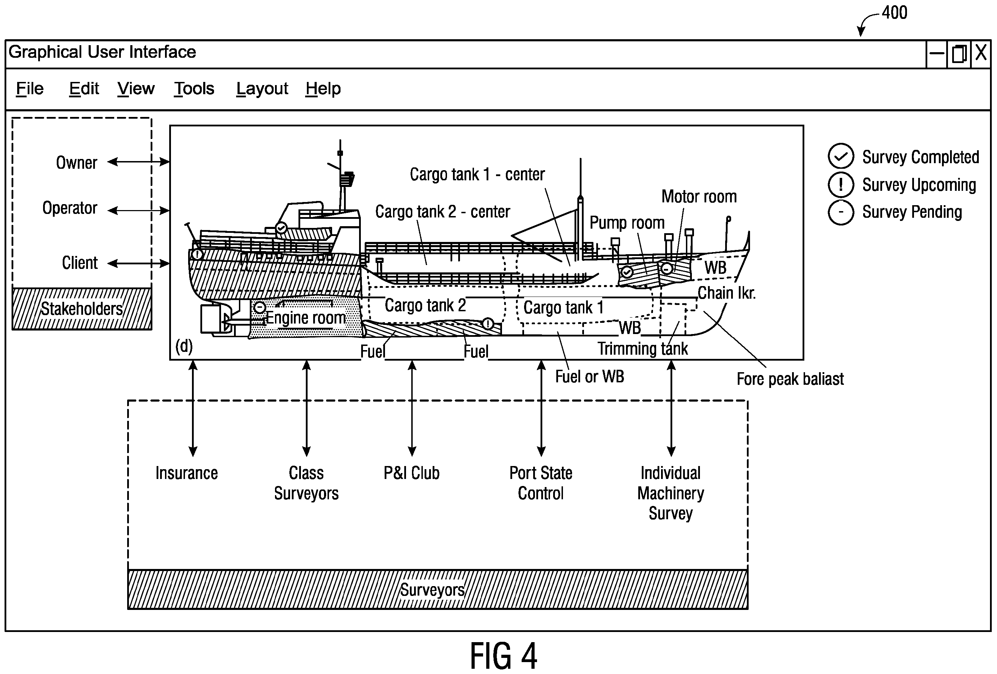

Referring to FIG 4, illustrated is a GUI 400 showing an exemplary virtual dashboard for an example use case of a merchant ship, demonstrating the application of the method 100 for conducting collaborative surveys of industrial components in a maritime context. The virtual dashboard depicts a cross-sectional view of a cargo ship with various components highlighted. The virtual dashboard provides real-time status information of different ship components to both stakeholders and surveyors. The stakeholders include the owner of the ship, the operator, and the client whose cargo is being transported. The surveyors involved in the inspection process include insurance providers, class surveyors, Protection and Indemnity (P&I) Club, Port State Control (PSC) authorities, and surveyors for specific equipment such as life-saving appliances. The survey status of different ship components is visually represented using different icons and/or color-coded indicators, such as green for completed surveys, yellow for upcoming surveys, and red for pending surveys. This visual representation allows for quick assessment of the survey state across the vessel. The method 100 may implement digital twins of different parts of the ship, which are continuously updated with information from sensors placed throughout the vessel. These digital twins assist in conducting surveys and provide additional information such as health, performance, and remaining life of each component, all of which can be accessed through the virtual dashboard.

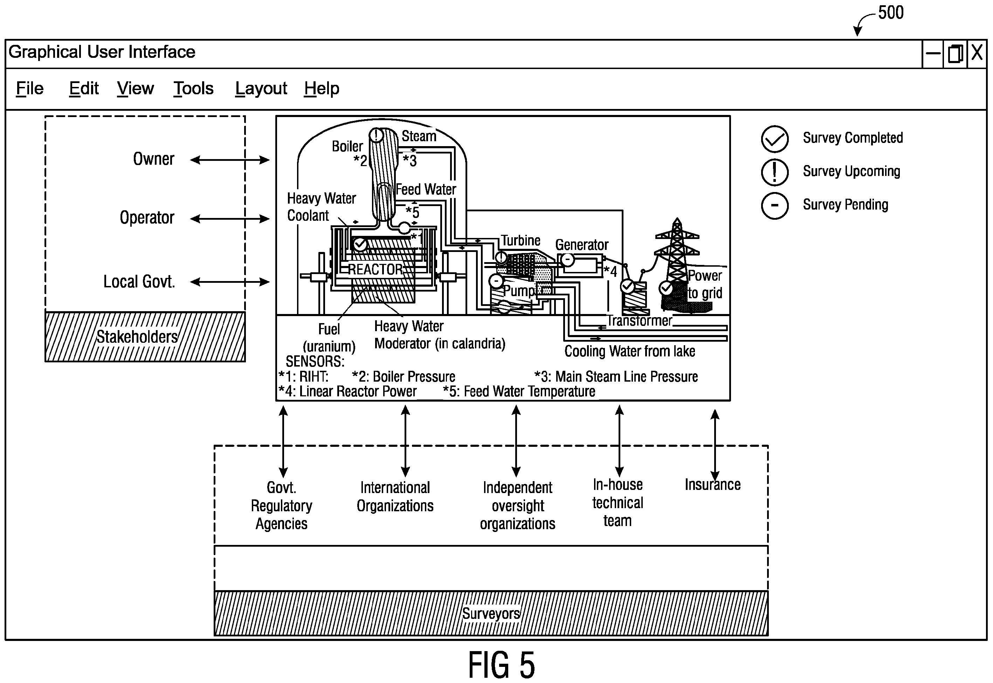

Referring to FIG 5, illustrated is a GUI 500 showing an exemplary virtual dashboard for an example use case of a nuclear power plant (NPP), demonstrating the application of the method 100 for conducting collaborative surveys of industrial components in a nuclear energy context. The virtual dashboard depicts a schematic representation of an NPP with various critical components highlighted. The virtual dashboard provides real-time status information of different NPP components to both stakeholders and surveyors. The stakeholders include the owner of the facility, the operator responsible for day-to-day operations, and the local government. The surveyors involved in the inspection process include government regulatory agencies, international organizations, independent oversight organizations, in-house technical teams, and insurance providers. The survey status of different NPP components is visually represented using different icons and/or color-coded indicators, such as green for completed surveys, yellow for upcoming surveys, and red for pending surveys. This visual representation allows for quick assessment of the In-Service Inspection (ISI) state across the facility.

During the operational lifespan of a NPP, its components are exposed to various unpredictable factors like stress, temperature, irradiation, corrosion, and more, which can lead to changes in material properties. In-Service Inspection (ISI) involves regular surveys of NPP components to ensure their health and safety, with Pre-service Inspection (PSI) establishing baseline data for future comparisons. The scope of ISI is determined by criteria ensuring the detection of component deterioration that could compromise safety systems or overall plant integrity, encompassing fluid-retaining components, piping, and systems crucial for safety. The components highlighted for regular ISI include the boiler, reactor, turbine, pump, generator, and transformer. The method 100 may implement digital twins of different parts of the NPP, which are continuously updated with information from sensors placed throughout the facility. These sensors, as indicated in FIG 5, monitor various parameters such as radiation heat transfer (RHT), boiler pressure, main steam line pressure, linear reactor power, and feed water temperature. The digital twins assist in conducting remote surveys and provide additional information such as health, performance, and remaining life of each component, all of which can be accessed through the virtual dashboard. This approach enables the detection of component deterioration that could compromise safety systems or overall plant integrity, encompassing fluid-retaining components, piping, and systems crucial for safety.

The method 100 of the present invention provides advancement in the field of industrial component surveying. The method 100 differentiates from known techniques in its utilization of a virtual dashboard that integrates real-time sensor data and simulation data from digital twins of industrial components. This integration, combined with the collaborative and interactive elements enabled by the virtual environment, allows for efficient execution of surveys across various industrial settings. The ability to facilitate remote surveys, coordinate parallel execution of assessment tasks, and dynamically adjust survey workflows based on real-time progress tracking distinguishes the present method 100 from existing case-specific protocols.

In particular, the virtual dashboard provides real-time accessible survey reports to different stakeholders and survey teams, enabling immediate access to required information. The method 100 allows for the conduct of surveys remotely using virtual reality and remote sensors, reducing the need for physical presence and associated risks. The collaborative and interactive nature of the surveys, involving different teams simultaneously, enhances the comprehensiveness and accuracy of assessments. The integration of simulation-assisted surveys, powered by digital twins, supports better decision-making processes. The efficient execution of surveys enabled by the virtual dashboard and collaborative features results in reduced downtime of industrial systems. The ability to conduct parallel assessments and remotely access information contributes to a reduction in the overall time required for surveys. In the context of specific applications, such as merchant ships, this translates to less downtime, leading to lowered operational costs.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### Reference Numerals

| | |
|---|---|
| method | 100 |
| step | 102 |
| step | 104 |
| step | 106 |
| step | 108 |
| step | 110 |
| system | 200 |
| bus | 202 |
| processing unit | 204 |
| memory unit | 206 |
| interface | 208 |
| database | 210 |
| input device | 212 |
| output device | 214 |
| survey-conducting module | 216 |
| graphical user interface | 300A |
| graphical user interface | 300B |
| graphical user interface | 300C |
| graphical user interface | 300D |
| graphical user interface | 400 |
| graphical user interface | 500 |

## Claims

1. A computer-implemented method (100) for conducting collaborative surveys of industrial components, comprising implementing a processing unit for:
providing a virtual dashboard comprising current information about a plurality of industrial components to be surveyed, wherein the current information includes survey status information and component state information;
integrating sensor data, from corresponding physical sensors, and simulation data, from corresponding digital twins, of the plurality of industrial components, into the virtual dashboard;
authenticating user devices associated with survey personnel to provide access to the virtual dashboard;
facilitating execution of predefined survey workflows for the industrial components by the survey personnel using corresponding authenticated user devices via the virtual dashboard, wherein each survey workflow comprises a sequence of assessment tasks for at least one of the plurality of industrial components to evaluate survey metrics therefor; and
updating the virtual dashboard using the survey metrics of the at least one of the plurality of industrial components.

2. The method (100) according to claim 1, wherein providing the virtual dashboard comprises generating a virtual environment representing the plurality of industrial components with the current information thereof, for information retrieval therefrom.

3. The method (100) according to claims 1 and 2, wherein authenticating user devices associated with survey personnel to provide access to the virtual dashboard comprises:
assigning one or more assessment tasks to each of the user devices associated with survey personnel based on predefined roles thereof; and
configuring the virtual environment to restrict permissions for information retrieval about the plurality of industrial components to each of the user devices associated with survey personnel based on assigned one or more assessment tasks thereto.

4. The method (100) according to any of the preceding claims, wherein integrating the sensor data and the simulation data from the digital twins comprises:
collecting, from the physical sensors, the sensor data associated with the plurality of industrial components;
implementing, by the digital twins, physics-based simulation(s) and/or AI-based simulation(s) for the plurality of industrial components based, at least in part, on the collected sensor data to generate the simulation data; and
updating the virtual dashboard using the collected sensor data and the generated simulation data.

5. The method (100) according to any of the preceding claims, wherein facilitating execution of predefined survey workflows using the authenticated user devices comprises enabling real-time collaboration between the user devices associated with survey personnel by at least one of real-time chat, voice communication, video conferencing, collaborative document editing, and shared virtual environments.

6. The method (100) according to any of the preceding claims, wherein facilitating execution of predefined survey workflows comprises displaying one or more of on-site camera feeds related to the industrial components on the authenticated user devices.

7. The method (100) according to any of the preceding claims, wherein facilitating execution of predefined survey workflows further comprises configuring the virtual dashboard to coordinate parallel execution of assessment tasks across multiple industrial components.

8. The method (100) according to any of the preceding claims further comprising:
tracking progress of completion of each assessment task in the survey workflow; and
dynamically adjusting the sequence of remaining assessment tasks in the survey workflow based on the tracked progress.

9. The method (100) according to any of the preceding claims, wherein updating the virtual dashboard comprises:
processing the survey metrics of the at least one of the plurality of industrial components to identify one or more changes in the component state information; and
dynamically updating the current information about the plurality of industrial components within the virtual dashboard based on the identified changes in the component state information.

10. The method (100) according to any of the preceding claims, wherein the survey status information comprises at least one of survey completed, survey ongoing, and survey pending; and the component state information comprises at least one of operational status, performance metrics, and maintenance history.

11. A system (200) comprising:
one or more processing units (204); and
a memory unit (206) communicatively coupled to the one or more processing units (204), wherein the memory unit (206) comprises a survey-conducting module (216) stored in the form of machine-readable instructions executable by the one or more processing units (204), wherein the survey-conducting module (216) is configured to perform method (100) steps for conducting collaborative surveys of industrial components, according to any of the claims 1 to 10.

12. A computer-program product having machine-readable instructions stored therein, which when executed by one or more processing units (204), cause the one or more processing units (204) to perform a method (100) according to any of the claims 1 to 10.
